# EUROPÄISCHE PATENTANMELDUNG

(11) **EP 4 311 667 A1**
(43) Veröffentlichungstag der Anmeldung: **31.01.2024**
(21) Anmeldenummer: 23181248.8
(22) Anmeldetag: 23.06.2023
(51) Int. Cl.: B32B 7/027, B32B 27/08, B32B 27/18, B32B 27/30, B32B 27/32, B32B 27/34

(54) **VERBUNDFOLIE AUS KUNSTSTOFF ZUR HERSTELLUNG VON VERPACKUNGEN**

(30) Priorität: 26.07.2022 DE 102022118679
(71) Anmelder: Bischof + Klein SE & Co. KG, 49525 Lengerich (DE)
(72) Erfinder: WEDI, Johannes, 48282 Emsdetten (DE)
(74) Vertreter: Deters, Frank

(57) **Zusammenfassung**

Verbundfolie (2) aus Kunststoff zur Herstellung von Verpackungen, mit einer Außenschicht (4) und mit einer der Außenschicht (4) gegenüberliegenden Innenschicht (6) sowie optional weiteren zwischen diesen beiden Schichten angeordneten Zwischenschichten (8), wobei die Außenschicht (4) und die Innenschicht (6) aus Polyethylen und optional Additiven bestehen und der Kunststoff der Außenschicht (4) eine Schmelztemperatur aufweist, die höher ist, als die Schmelztemperatur des Kunststoffs der Innenschicht (6). Der Kunststoff der Außenschicht (4) weist eine Schmelztemperatur auf, die mindestens 45 °C höher ist, als die Schmelztemperatur des Kunststoffs der Innenschicht (6). Die Schmelztemperatur der Innenschicht (6) ist niedriger als 85 °C und die Innenschicht (6) enthält Antiblockmittel in einer Menge enthält, dass zwei unmittelbar aufeinanderliegende Innenschichten (6) mit einer Kraft von weniger als 3 cN/mm voneinander abziehbar sind. (Fig. 1)

## Beschreibung

Die Erfindung betrifft eine Verbundfolie aus Kunststoff zur Herstellung von Verpackungen, mit einer Außenschicht und mit einer der Außenschicht gegenüberliegenden Innenschicht sowie optional weiteren zwischen diesen beiden Schichten angeordnete Zwischenschichten. Die Außenschicht und die Innenschicht bestehen aus Polyethylen und optional Additiven und der Kunststoff der Außenschicht weist eine Schmelztemperatur auf, die höher ist, als die Schmelztemperatur des Kunststoffs der Innenschicht.

Aus der WO 2004/00285 A1 ist eine Verbundfolie der eingangs genannten Art bekannt. Die Außenschicht besteht aus HDPE (High-Density-Polyethylen) mit einer Schmelztemperatur von etwa 132 °C bis 133 °C. Die Innenschicht besteht aus m-PE oder LDPE mit einer Schmelztemperatur von etwa 95 °C bis 97 °C. Die Verbundfolie und eine daraus hergestellte Verpackung sind sortenrein aus Polyethylen und können dadurch gut recycelt werden. Siegelnähte können in die Folie jedoch nur langsam mit einer Geschwindigkeit von etwa einer Sekunde pro Siegelvorgang eingebracht werden. Verpackungen aus einer derartigen Verbundfolie können daher ebenfalls nur langsam hergestellt oder mit einer Siegelnaht verschlossen werden.

Zudem sind Verbundfolien zur Herstellung von Verpackungen mit einer Außenschicht aus PET (Polyethylenterephthalat) und einer Innenschicht aus LDPE (Low-Density-Polyethylen) seit Jahrzehnten bekannt und bewährt. PET hat dabei eine deutlich höhere Schmelztemperatur als LDPE. Zur Herstellung von Verpackungen aus der Verbundfolie wird diese mit zumindest einer Siegelnaht versehen. Die Verbundfolie wird hierzu derart gefaltet, dass zwei Innenschichten aufeinanderliegen. Mit einem Siegelwerkzeug wird dann im Bereich der zu erstellenden Siegelnaht auf die beiden außenliegenden Außenschichten eingewirkt. Hierdurch wird die Temperatur der Verbundfolie lokal erhöht, wobei die Temperaturerhöhung so gewählt ist, dass die Schmelztemperatur der Innenschichten überschritten wird und diese daher miteinander verschmelzen. Die Schmelztemperatur der Außenschichten wird durch die Temperaturerhöhungen hingegen nicht erreicht, sodass diese unverändert bleiben. Derartige Verpackungen können jedoch nur bedingt recycelt werden.

Der Erfindung liegt die Aufgabe zugrunde, eine Verbundfolie der eingangs genannten Art bereitzustellen, die gut recycelt werden kann, in die gleichzeitig aber auch Siegelnähte schnell eingebracht werden können und aus der daher auch Verpackungen schnell hergestellt oder mit einer Siegelnaht verschlossen werden können. Der Erfindung liegt ferner die Aufgabe zugrunde, einen Folienschlauch oder eine Verpackung aus einer Verbundfolie der eingangs genannten Art mit den gleichen vorgenannten Vorteilen bereitzustellen.

Die erfindungsgemäße Aufgabe wird durch eine Verbundfolie mit den Merkmalen des Patentanspruchs 1 sowie durch einen Folienschlauch mit den Merkmalen des Anspruchs 9 und eine Verpackung mit den Merkmalen des Anspruchs 10 sowie durch eine Verwendung nach Anspruch 11 gelöst. Weitere vorteilhafte Ausgestaltungen sind den Unteransprüchen 2 bis 8 zu entnehmen.

Erfindungsgemäß weist der Kunststoff der Außenschicht eine Schmelztemperatur auf, die mindestens 45 °C, bevorzugt mehr als 55 °C und besonders bevorzugt mehr als 60 °C höher ist, als die Schmelztemperatur des Kunststoffs der Innenschicht. Die Schmelztemperatur der Innenschicht ist niedriger als 85 °C, bevorzugt niedriger als 80 °C und besonders bevorzugt niedriger als 75 °C. Polyethylen-Kunststoffe mit derart niedrigen Schmelztemperaturen weisen aus sich selbst heraus stark haftende, klebrige Oberflächen auf und wurden entwickelt um daraus Haftfolien oder auch Adhäsionsfolien zum Schutz von empfindlichen Oberflächen herzustellen, ohne dass auf diese Haftfolien oder Adhäsionsfolien zusätzlich ein Kleber aufgebracht werden muss. Diese Polyethylen-Kunststoffe werden also gerade wegen der haftenden, klebrigen Oberfläche verwendet. Überraschender Weise wurde nun festgestellt, dass diese Polyethylen-Kunststoffe als Innenschicht in einer Verbundfolie zur Herstellung von Verpackungen geeignet sind, wenn diese zudem ein Antiblockmittel in einer derart ungewöhnlich großen Menge enthält, dass zwei unmittelbar aufeinanderliegende Innenschichten mit einer Kraft von weniger als 3 cN/mm voneinander abziehbar sind. Die Adhäsionskräfte zwischen den zwei sich berührenden Innenschichten betragen also weniger als 3 cN/mm. Die Schichten können damit aufeinanderliegend, ohne aneinander zu haften, relativ zueinander verschoben werden. Die niedrige Schmelztemperatur bleibt dabei erhalten. Daraus ergibt sich ein großes Verarbeitungsfenster in Form einer Schmelztemperaturdifferenz zwischen der Schmelztemperatur der Außenschicht und der Schmelztemperatur der Innenschicht von mehr als 45 °C, bevorzugt von mehr als 55 °C und besonders bevorzugt von mehr als 60 °C. Es wurde ebenfalls überraschend festgestellt, dass aufgrund dieser großen Schmelztemperaturdifferenz die Einwirkzeit eines erhitzten Siegelwerkzeugs auf die Verbundfolie zur Erstellung einer Siegelnaht auf etwa 0,1 - 0,2 Sekunden reduziert werden kann. Verpackungen lassen sich dadurch ebenfalls entsprechend schneller aus einer derartigen Verbundfolie herstellen oder auch verschließen. Aus der Verbundfolie oder einem daraus hergestellten Folienschlauch können dadurch auf herkömmlichen Verpackungsmaschinen Verpackungen im FFS-Verfahren (form, fill and seal-Verfahren) hergestellt werden, da Siegelnähte mit einer Taktung von weniger als einer Sekunde hergestellt werden können und die während der Herstellung aufeinanderliegenden Innenschichten der Verbundfolie nicht aneinanderhaften.

In einer vorteilhaften Ausgestaltung der Erfindung weist die Außenschicht eine Schmelztemperatur von mehr als 120 °C, bevorzugt von mehr als 125 °C und besonders bevorzugt von mehr als 130 °C auf. Hierdurch ist die Schmelztemperaturdifferenz zwischen dem Material der Außenschicht und dem Material der Innenschicht besonders groß.

Mit Vorteil besteht die Außenschicht aus HDPE oder orientiertem PE. Unter orientiertem PE wird hierbei monoaxial-orientiertes oder biaxial-orientiertes PE verstanden.

In einer vorteilhaften Ausgestaltung der Erfindung besteht die Innenschicht überwiegend aus LDPE und enthält Antiblockmittel in einem Anteil von zumindest 7 Gew.-%, insbesondere von zumindest 8 Gew.-% und besonders bevorzugt von zumindest 9 Gew.-% bezogen auf die Innenschicht. Diese Mindestmenge an Antiblockmittel hat sich dabei als besonders geeignet erwiesen, die klebrigen Eigenschaften des Polyethylen-Materials der Innenschicht mit der sehr niedrigen Schmelztemperatur aufzuheben.

Mit Vorteil enthält die Innenschicht Antiblockmittel in einem Anteil von höchstens 15 Gew.-%, insbesondere höchstens 13 Gew.-% bezogen auf die Innenschicht. Bei einer derartigen Höchstmenge an Antiblockmittel überwiegen noch die Vorteile des Antiblockmittels in der Innenschicht in Form der Aufhebung der klebrigen Eigenschaften gegenüber etwaigen Nachteilen des Antiblockmittels.

In einer bevorzugten Ausgestaltung der Erfindung ist das Antiblockmittel ausgewählt aus Kreide, Silikat, Talkum, Erucasäureamid oder Ölsäureamid oder einer Mischung aus zwei oder mehr dieser Komponenten. Diese Antiblockmittel haben sich als besonders geeignet erwiesen.

In einer besonders bevorzugten Ausgestaltung der Erfindung bestehen sämtliche Schichten der Verbundfolie aus Polyethylen und optional Additiven. Eine derartige Verbundfolie und daraus hergestellte Verpackungen können besonders einfach recycelt werden.

In einer hierzu alternativen vorteilhaften Ausgestaltung der Erfindung weist die Verbundfolie eine Zwischenschicht aus Ethylenvinylalkohol oder Polyamid auf, deren Dicke 3 µm bis 9 µm, insbesondere 5 µm bis 7 µm beträgt. Die Zwischenschicht dient dann als Barriereschicht für Luft, die von außen in eine aus der Verbundfolie hergestellte Verpackung eindringen könnte, und für Fette, die von innen aus einer aus der Verbundfolie hergestellten Verpackung austreten könnten. Die Zwischenschicht ist dabei so dünn gewählt, dass diese beim Recyceln nicht stört.

Mit Vorteil ist die erfindungsgemäße Verbundfolie frei von Zwischenschichten aus Metall. Die Verbundfolie und daraus hergestellte Verpackungen können dadurch einfacher recycelt werden.

In einer vorteilhaften Ausgestaltung der Erfindung wird die erfindungsgemäße Verbundfolie oder ein erfindungsgemäßer Folienschlauch zur Herstellung einer Kunststoff-Verpackung in einem FFS-Verfahren (form, fill and seal-Verfahren) mit einer Taktrate zur Herstellung, Befüllung und Versiegelung der Kunststoff-Verpackungen von weniger als 1 Sekunde, bevorzugt von weniger als 0,8 Sekunden und besonders bevorzugt von weniger als 0,5 Sekunden verwendet. Bevorzugt werden aus der erfindungsgemäßen Verbundfolie Standbodenbeutel und/oder Seitenfaltenbeutel auf herkömmlichen Verpackungsmaschinen zur Herstellung derartiger Beutel, die bisher für die Herstellung von Beuteln aus einer Verbundfolie mit einer Außenschicht aus PET und einer Innenschicht aus LDPE verwendet wurden, hergestellt.

Nachfolgend werden zwei schematisch dargestellte Ausführungsbeispiele der erfindungsgemäßen Verbundfolie näher beschrieben; es zeigen:
- Fig.1: eine erfindungsgemäße Verbundfolie im Querschnitt, den Schichtaufbau darstellend und
- Fig. 2: eine alternative erfindungsgemäße Verbundfolie im Querschnitt, ebenfalls den Schichtaufbau darstellend.

Nachfolgend werden gleichwirkende Elemente der Erfindung in den Ausführungsbeispielen mit einer einheitlichen Bezugsziffer versehen, sofern dies sinnvoll ist. Die anhand der Ausführungsbeispiele erläuterten Merkmale der Erfindung können auch in anderen Kombinationen Gegenstand der Erfindung sein.

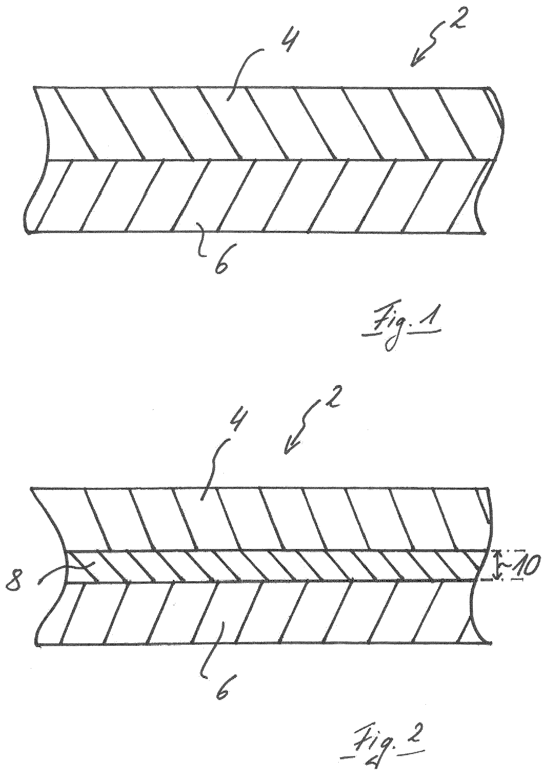

Fig. 1 zeigt eine erfindungsgemäße Verbundfolie 2 zur Herstellung von Verpackungen im Querschnitt den Schichtaufbau der Verbundfolie 2 darstellend. Die Verbundfolie 2 umfasst eine Außenschicht 4 und eine der Außenschicht 4 gegenüberliegende Innenschicht 6.

Fig. 2 zeigt eine weitere erfindungsgemäße Verbundfolie 2 zur Erstellung von Verpackungen im Querschnitt, ebenfalls den Schichtaufbau der Verbundfolie 2 darstellend. Die Verbundfolie 2 umfasst hierbei eine Außenschicht 4 und eine der Außenschicht 4 gegenüberliegende Innenschicht 6 sowie eine zwischen diesen beiden Schichten 4, 6 angeordnete Zwischenschicht 8. Die Zwischenschicht 8 besteht dabei aus Ethylenvinylalkohol oder Polyamid und weist eine Dicke, dargestellt durch den Doppelpfeil 10, von 3 µm bis 9 µm, insbesondere von 5 µm bis 7 µm auf.

## Patentansprüche

1. Verbundfolie (2) aus Kunststoff zur Herstellung von Verpackungen, mit einer Außenschicht (4) und mit einer der Außenschicht (4) gegenüberliegenden Innenschicht (6) sowie optional weiteren zwischen diesen beiden Schichten angeordneten Zwischenschichten (8), wobei die Außenschicht (4) und die Innenschicht (6) aus Polyethylen und optional Additiven bestehen und der Kunststoff der Außenschicht (4) eine Schmelztemperatur aufweist, die höher ist, als die Schmelztemperatur des Kunststoffs der Innenschicht (6), **dadurch gekennzeichnet, dass** der Kunststoff der Außenschicht (4) eine Schmelztemperatur aufweist, die mindestens 45 °C höher ist, als die Schmelztemperatur des Kunststoffs der Innenschicht (6), die Schmelztemperatur der Innenschicht (6) niedriger als 85 °C ist und die Innenschicht (6) Antiblockmittel in einer Menge enthält, dass zwei unmittelbar aufeinanderliegende Innenschichten (6) mit einer Kraft von weniger als 3 cN/mm voneinander abziehbar sind.

2. Verbundfolie (2) nach einem der vorhergehenden Ansprüche, **dadurch gekennzeichnet, dass** die Außenschicht (4) eine Schmelztemperatur von mehr als 120°C, bevorzugt von mehr als 125 °C und besonders bevorzugt von mehr als 130°C aufweist.

3. Verbundfolie (2) nach einem der vorhergehenden Ansprüche, **dadurch gekennzeichnet, dass** die Außenschicht (4) aus HDPE oder orientiertem PE besteht.

4. Verbundfolie (2) nach einem der vorhergehenden Ansprüche, **dadurch gekennzeichnet, dass** die Innenschicht (6) überwiegend aus LDPE besteht und Antiblockmittel in einem Anteil von zumindest 7 Gew.-%, insbesondere von zumindest 8 Gew.-% und besonders bevorzugt von zumindest 9 Gew.-% bezogen auf die Innenschicht (6) enthält.

5. Verbundfolie (2) nach einem der vorhergehenden Ansprüche, **dadurch gekennzeichnet, dass** die Innenschicht (6) Antiblockmittel in einem Anteil von höchstens 15 Gew.-%, insbesondere höchstens 13 Gew.-% bezogen auf die Innenschicht (6) enthält.

6. Verbundfolie (2) nach einem der vorhergehenden Ansprüche, **dadurch gekennzeichnet, dass** das Antiblockmittel ausgewählt ist aus Kreide, Silikat, Talkum, Erucasäureamid oder Ölsäureamid oder einer Mischung aus zwei oder mehr dieser Komponenten.

7. Verbundfolie (2) nach einem der vorhergehenden Ansprüche, **dadurch gekennzeichnet, dass** sämtliche Schichten (4, 6, 8) der Verbundfolie (2) aus Polyethylen und optional Additiven bestehen.

8. Verbundfolie (2) nach einem der Ansprüche 1 bis 7, **gekennzeichnet durch** eine Zwischenschicht (8) aus Ethylenvinylalkohol oder Polyamid deren Dicke (10) 3 µm bis 9 µm, insbesondere von 5 µm bis 7 µm beträgt.

9. Folienschlauch, zur Herstellung von Beuteln, **dadurch gekennzeichnet, dass** der Folienschlauch aus einer Verbundfolie (2) nach einem der Ansprüche 1 bis 8 besteht.

10. Verpackung, **dadurch gekennzeichnet, dass** diese aus einer Verbundfolie (2) nach einem der Ansprüche 1 bis 8 oder aus einem Folienschlauch nach Anspruch 9 besteht und zwei Innenschichten (6) miteinander über wenigstens zwei Siegelnähte verbunden sind.

11. Verwendung einer Verbundfolie (2) nach einem der Ansprüche 1 bis 8 oder eines Folienschlauchs nach Anspruch 9 zur Herstellung einer Kunststoff-Verpackung in einem FFS-Verfahren mit einer Taktrate zur Herstellung, Befüllung und Versiegelung der Kunststoff-Verpackungen von weniger als 1 Sekunde, bevorzugt von weniger als 0,8 Sekunden und besonders bevorzugt von weniger als 0,5 Sekunden.
